(19) **Europäisches Patentamt / European Patent Office / Office européen des brevets**

(11) **EP 3 649 729 B1**

(12) **EUROPEAN PATENT SPECIFICATION**

(45) Date of publication and mention of the grant of the patent:
**01.09.2021 Bulletin 2021/35**

(21) Application number: **17742192.2**

(22) Date of filing: **07.07.2017**

(51) Int Cl.:
*H02M 7/49* (2007.01)    *H02M 7/483* (2007.01)

(86) International application number:
**PCT/EP2017/067063**

(87) International publication number:
**WO 2019/007526 (10.01.2019 Gazette 2019/02)**

(54) **HYBRID POWER CONVERTER**

HYBRIDER LEISTUNGSWANDLER

CONVERTISSEUR DE PUISSANCE HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.05.2020 Bulletin 2020/20**

(73) Proprietor: **ABB Power Grids Switzerland AG 5400 Baden (CH)**

(72) Inventors:
• **MOHANAVEERAMANI, Aravind**
  **600125 Chennai (IN)**
• **NAMI, Alireza**
  **722 19 Västerås (SE)**

(74) Representative: **AWA Sweden AB**
  **P.O. Box 45086**
  **104 30 Stockholm (SE)**

(56) References cited:
**WO-A1-2014/082657**

• **OATES COLIN ET AL: "The augmented modular multilevel converter", 2014 16TH EUROPEAN CONFERENCE ON POWER ELECTRONICS AND APPLICATIONS, IEEE, 26 August 2014 (2014-08-26), pages 1-10, XP032651103, DOI: 10.1109/EPE.2014.6910871 [retrieved on 2014-09-25]**
• **OATES COLIN ET AL: "The controlled transition bridge", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 September 2015 (2015-09-08), pages 1-10, XP032800250, DOI: 10.1109/EPE.2015.7309295 [retrieved on 2015-10-27]**

## Description

### TECHNICAL FIELD

The present disclosure relates to a power converter configured for being connected to a three-phase AC grid.

### BACKGROUND

The classic Static VAR (Volt-Ampere Reactive) Compensator, SVC, converter is robust and cost effective due to the choice of series connected thyristors as the switches. However, the SVC needs large lower order harmonic filters to meet the grid voltage standards. This increases the overall cost due to filter component costs, filter losses and footprint. At the same time, the SVC Light converters (chain-link based) needs no lower order harmonic filters but has higher losses, over rating of converter (i.e., current derating for Delta ($\Delta$) and voltage derating for Wye (Y, star) topology) to operate in unbalanced conditions and stored energy requirement in the cell capacitors.

The publications OATES, COLIN ET AL: "The augmented modular multilevel converter", 2014, 16TH EUROPEAN CONFERENCE ON POWER ELECTRONICS AND APPLICATIONS, IEEE, 26 August 2014 (2014-08-26), and OATES, COLIN ET AL: "The controlled transition bridge", 2015, 17TH EUROPEAN CONFERENCE ON POWER ELECTRONICS AND APPLICATIONS, 8 September 2015 (2015-09-08) as well as patent application publication WO2014/082657 A1 all disclose hybrid power converter topologies using chain-link cells.

### SUMMARY

Hybrid solutions are looked into where an optimization between the classic SVC and SVC Light power converters is attained. Such a hybrid topology which is suitable for e.g. Flexible Alternating Current Transmission Systems (FACTS) or High Voltage Direct Current (HVDC) applications is proposed herein.

Embodiments of the present invention provides a hybrid topology using chain-link cells in combination with director valves. The chain-link cells are used as wave shaper to generate the required Alternating Current (AC) voltage (with insignificant harmonic generation) and the director valves are switched in such a manner as to balance the energy between the chain-link cells. This topology is aimed at gaining the advantages of both the chain-link and classic power converters. Control principles of the topology and wave shaper arm energy balancing during unbalanced operating conditions were simulated.

According to an aspect of the present invention, there is provided a power converter configured for being connected to an AC grid having three phases. The converter comprises a full-bridge director switch arrangement, and a chain-link leg comprising a first arm of chain-linked converter cells in series with a second arm of chain-linked converter cells. The director switch arrangement comprises first and second parallel director switch legs and connected across the chain-link leg, of which the first director switch leg comprises a first director switch in series with a fourth director switch, and the second director switch leg comprises a second director switch in series with a third director switch. The converter is configured to be connected to the AC grid such that a first phase of the AC grid is connected to the first director switch leg between the first and fourth director switches, a second phase of the AC grid is connected to the chain-link leg between the first and second chain-link arms, and a third phase of the AC grid is connected to the second director switch leg between the second and third director switches.

According to another aspect of the present invention, there is provided an electrical power network comprising an embodiment of the converter of the present disclosure and the three-phase AC grid.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:

Fig 1 is a schematic circuit diagram of an embodiment of an SVC in accordance with the present invention.

Fig 2 is a schematic graph illustrating (a) the grid voltage vaweforms $V_{ab}$ and $V_{cb}$ measured with the "b" phase as the reference, and (b) the voltages at "p" and "q" that need to be generated across the wave shaper and the switching instants of the director valves D1 & D2 and D3 & D4, respectively.

Fig 3 is a schematic graph illustrating (a) top and bottom wave shaper voltage references, and (b) voltage across the point "pq", i.e. the sum of the wave shaper voltages.

Fig 4 is a graph illustrating the voltage reference, the sum of cell capacitor voltages and the power waveforms of the top arm 3a for rated capacitive mode of operation.

Fig 5 is a schematic circuit diagram illustrating thyristor commutation over time in a first example case.

Fig 6 is a schematic circuit diagram illustrating thyristor commutation over time in a second example case.

Fig 7 is a schematic circuit diagram of an embodiment of an SVC with harmonic suppression by means of chain-link cells in the "a" and "c" phases on the AC side, in accordance with the present invention.

Fig 8 is a schematic circuit diagram of an embodiment of an SVC extended with additional chain-link arm to a railway grid, in accordance with the present invention.

## DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

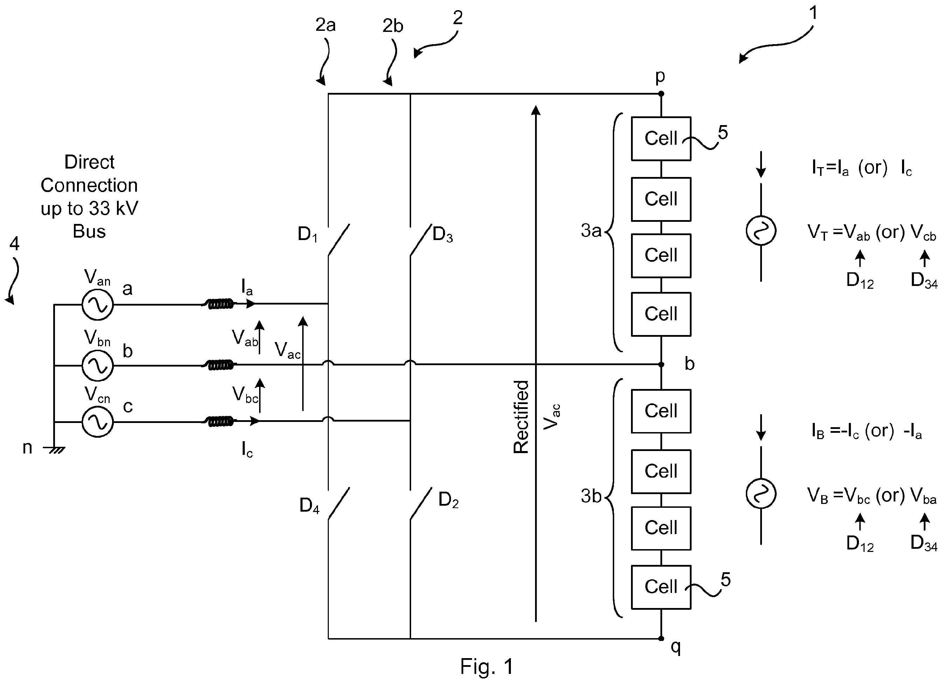

The proposed topology is hybrid i.e., has chain-link cells 5 as wave shapers and director switches D to connect the wave shapers to the AC side so as to have an energy balancing in the cell capacitors. An embodiment of the proposed topology is shown in figure 1.

Figure 1 illustrates an SVC 1 connected to an AC grid 4 having three phases a, b and c. A leg 3 of chain-linked (i.e. series connected, also called cascaded) converter cells 5 is connected between a top point p and a bottom point q, and divided into a top wave shaper arm 3a between the point p and a middle point b and a bottom wave shaper arm 3b between the bottom point q and the middle point b. Each converter cell 5 conventionally comprises an energy storage, typically a capacitor arrangement comprising at least one capacitor, and a plurality of semiconductor switches forming a half-bridge (also called monopolar) topology or a full-bridge (also called bipolar or H-bridge) topology. In case of a using a half bridge topology, each of the wave-shaper arms (i.e., top or bottom) may be composed of two sets of half bridge cells which are connected in opposite polarities on the AC side of the cells. In the three-phase AC network 4, the line to line voltage will have no zero sequence components. Hence, it is sufficient to have just the two chain-link arms 3a and 3b to generate the voltage Vab and $V_{bc}$ since $V_{ca} = -(V_{ab} + V_{bc})$. This is equivalent to connecting the points p to phase a and point q to phase c in figure 1. The top wave shaper 3a will generate the voltage $V_{ab}$. The bottom wave shaper 3b will generate the voltage $V_{bc}$ The current through the top and bottom wave shapers 3a and 3b are $I_a$ and $-I_c$, respectively.

In one case, the converter 1 is operating in the capacitive mode i.e., the phase current leads the phase voltage by 90°. It is to be noted that the phase angle between the phase current $I_a$ and line voltage $V_{ab}$ is 120° where the current leads the voltage. Similarly, the phase angle between the $I_c$ and $V_{bc}$ is -120° where the voltage leads the current. Hence, the apparent power in the top and bottom wave shaper arms 3a and 3b are, $S_T = |V_{ab}|*|I_a|*(-0.5 + jo.866)$ and $S_B = |V_{bc}|*|I_c|*(0.5 + jo.866)$.

It can be seen that both the top and bottom wave shapers 3a and 3b absorb capacitive VAR, but the top wave shaper 3a generates active power and the bottom wave shaper 3b absorbs active power for the considered case. Hence, the top chain-link arm 3a would discharge and the bottom arm 3b would charge when exchanging reactive power with the grid 4 even under balanced operating conditions. But the sum of the active power of the top and bottom arm is always zero, unless common mode power is exchanged with the grid i.e., product of similar sequence components of voltage and currents.

In order to balance the energy between the top and bottom wave shaper arms 3a and 3b, a director switch arrangement 2 is introduced. The director switch network of the embodiment of figure 1 comprises a first director switch leg 2a connected across the chain-link leg 3 between the points p and q and comprising a first director switch D1 and a fourth director switch D4, between which switches phase a of the AC grid 4 is connected, and a second director switch leg 2b connected across the chain-link leg 3 between the points p and q, in parallel with the first director switch leg 2a, and comprising a second director switch D2 and a third director switch D3, between which switches phase c of the AC grid 4 is connected. The phase b of the AC grid 4 is connected to the middle point b of the chain-link leg 3. The director switches D are thus switched in such a manner that the top and bottom wave shapers 3a and 3b interchange their roles for every half fundamental frequency cycle.

The director switches may be formed by series connection of semiconductor switches, like thyristor, IGCT, IGBT, BIGT, Silicon Carbide (SiC), etc., with anti-parallel diodes.

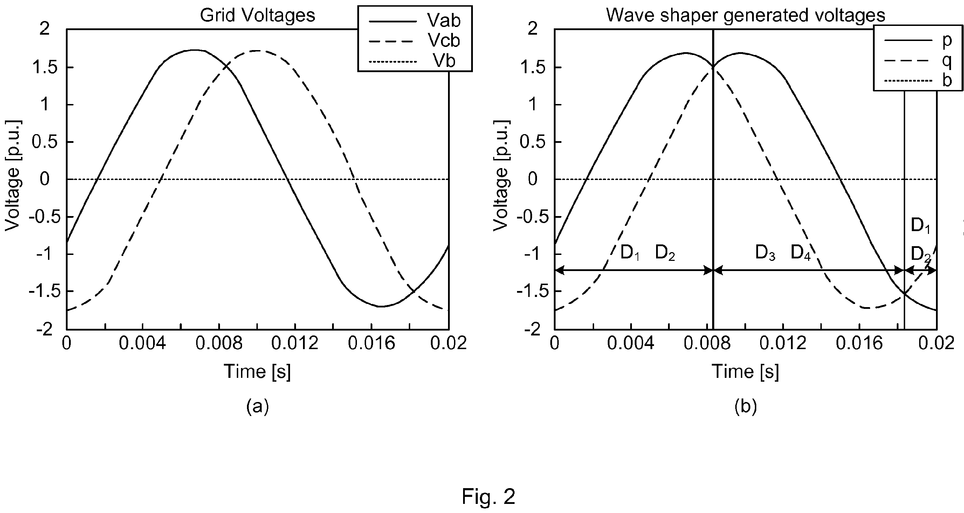

Let us consider the case of balanced voltages at the grid side. The line voltages $V_{ab}$ or $V_{cb}$ are plotted in figure 2(a) where $V_b$ is taken as the reference. If the wave shaper midpoint 'b' is considered as the reference, then the point 'p' should follow the top waveform (solid line) and the point 'q' should follow the bottom waveform (dashed line) (i.e., in figure 2(b)) in order to generate the line voltages successfully. To achieve this, the point 'p' is changed from phase 'a' to phase 'c' at $\theta=150°$ and from phase 'c' back to phase 'a' at $\theta=330°$ and *vice versa* for the point 'q'. Hence, the diverter switches D1 and D2 conduct during $\theta = 0°-150°$ and $330°-360°$, whereas the switches D3 and D4 conduct during $\theta = 150°-330°$.

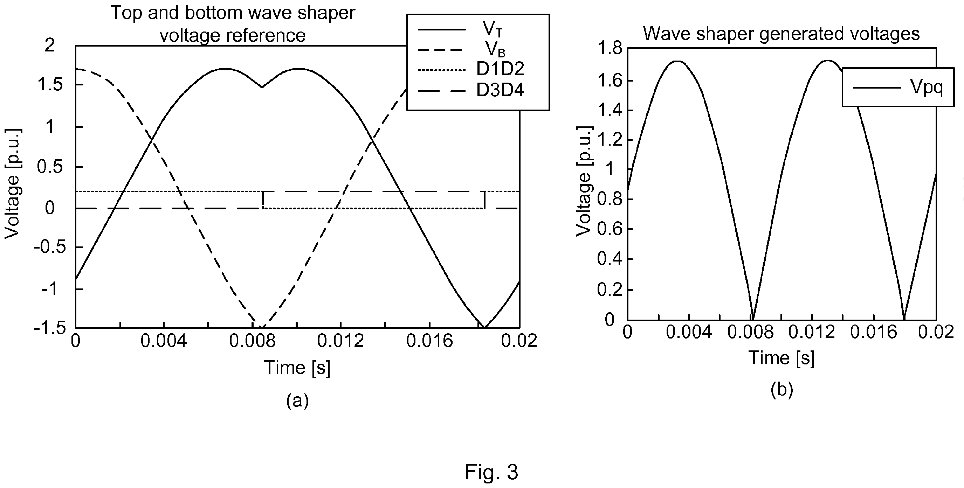

The voltage reference of the top ($V_T$) and bottom ($V_B$) wave shapers 3a and 3b are hence as shown in figure 3(a). Also, the voltage across the points 'pq' is basically the DC rectified waveform of $V_{ac}$ (see figure 1) which is shown in figure 3(b). Figure 3(b) and hence sum of wave shaper arms, i.e. pq, is also herein referred to as the DC side of the converter 1. This indicates that the director valves D1, D2, D3 and D4 are switched when the voltage $V_{pq}$ is zero. Hence, the director switches experience no switching loss i.e., zero voltage switching condition. It is noted that the director valves are switched during the condition $V_{ab} = V_{cb}$ which simplifies to $V_{ab}+V_{bc} = 0 = V_{ac}$. Hence, irrespective of the unbalance condition in the voltage, the switching of director valves happens when the condition $V_{ac} = 0$ is satisfied.

The condition to switch the director valves D and the respective voltage references and current through the top and bottom wave shapers 3a and 3b is tabulated in Table 1.

Table 1

| Condition | Switches to be ON | Top arm voltage reference ($V_T$) | Bottom arm voltage reference ($V_B$) | Top arm current ($I_T$) | Bottom arm current ($I_B$) |
|---|---|---|---|---|---|
| $V_{ab} >= V_{cb}$ | D1 and D2 | Vab | $V_{bc}$ | $I_a$ | $-I_c$ |
| $V_{ab} < V_{cb}$ | D3 and D4 | $V_{cb}$ | $V_{ba}$ | $I_c$ | $-I_a$ |

The apparent power of the top and bottom arms 3a and 3b when the switches D1 and D2 are on is $\vec{S}_{T12} = \vec{V}_{ab} * Conj(\vec{I}_a)$ and $\vec{S}_{B12} = \vec{V}_{bc} * Conj(-\vec{I}_c)$. When the switches D3 and D4 are switched ON, then the apparent powers of the top and bottom arms 3a and 3b are interchanged. Hence, the active power gained in the first half fundamental cycle is cancelled in the second half fundamental cycle. Thus, this topology does not need any circulating current as in the delta chain-link topology to balance the energy in the cell 5 capacitors. Moreover, it happens naturally i.e., complex optimization functions are not needed to be solved to generate the zero sequence current (or voltage) references as in delta (or wye) chain-link topologies.

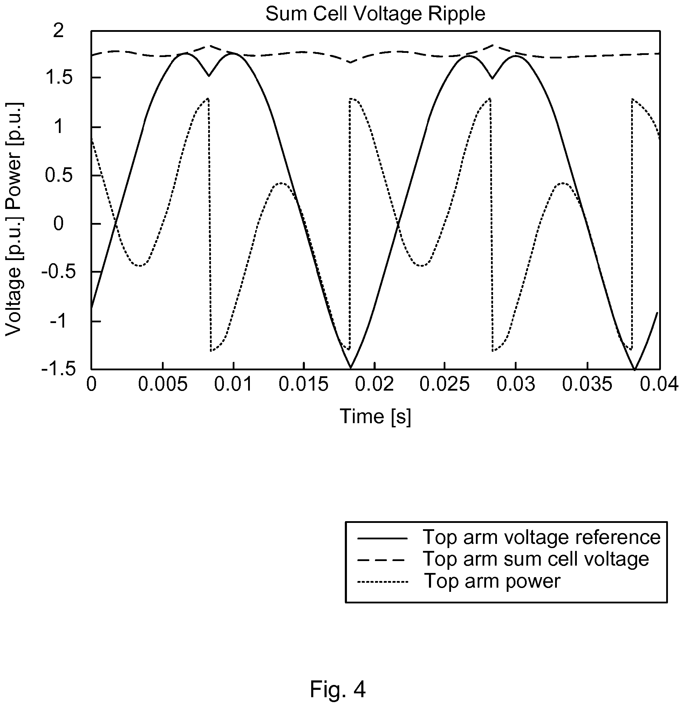

The voltage reference, sum cell capacitor voltage and the power waveforms of the top arm 3a for rated inductive mode of operation of the proposed converter 1 is shown in figure 4. For capacitive mode of operation, the sum cell voltage ripple and the power ripple waveforms are inverted. It can be seen that a fundamental ripple appear on the cell 5 capacitors in addition to the second harmonic ripple. This is due to the fact that the active power in the first half fundamental cycle is cancelled in the second half fundamental cycle.

It can be seen from figure 4 that the wave shaper arms 3a and 3b should generate both positive and negative voltages. Hence, full bridge cells 5 are preferably used. Integrated Gate-Commutated Thyristors (IGCT) may conveniently be used for the semiconductor switches of the cells 5 for the wave shaper arms 3a and 3b. Depending on the number of series connected cells 5 of each arm 3a and 3b and harmonic requirements on the AC side 4, the switching frequency per cell 5 is to be decided. A switching frequency within the range of 50 Hz to 75 Hz may be sufficient to meet the harmonic standards (<15th harmonic) in the grid code for cells 5 ranging between 20 to 10 respectively.

The director valves D need to block the peak AC line voltage. Hence, it should be a series connection of switches. The following semiconductor switches can be used as choice for the director valves D in the presented order of priority:

1) Series connected bi-directional thyristors, or series connected thyristors with anti-parallel diodes.

2) Series connected IGCT with anti-parallel diode.

3) Series connected Insulated-Gate Bipolar Transistor (IGBT) with anti-parallel diode.

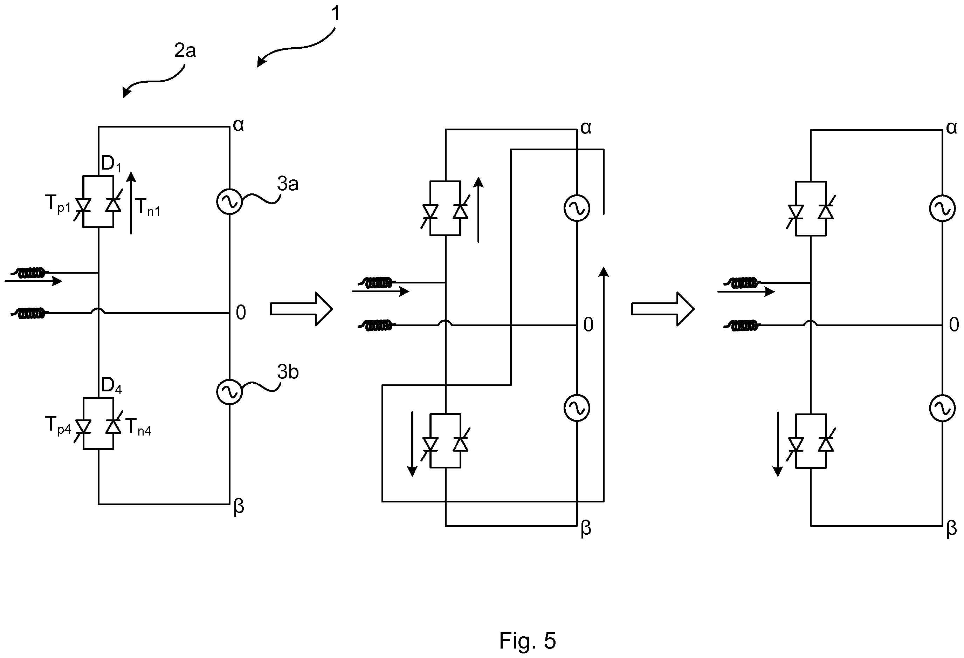

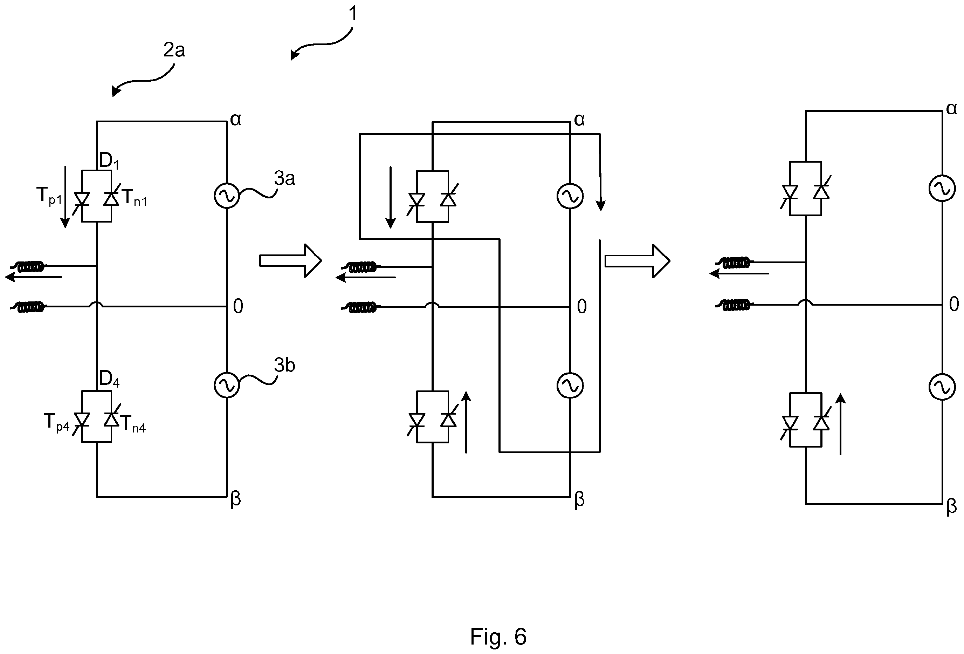

The choice of thyristor is due to its robustness and low cost. But a thyristor may generate voltage harmonics due to commutation problem for capacitive mode of operation. The commutation of thyristor for both the inductive and capacitive cases will be explained further below with reference to figures 5 and 6. Hence, the next choice is to have a switch that has turn-off capabilities like IGCT or IGBT. Since the switching of the director valves D happens when the voltage across the wave shapers 3a and 3b is zero i.e., ZVS (zero voltage sum), series connection of IGCT may be realized. Also, the voltage across the director valves D is the DC rectified waveform of $V_{ac}$. Hence an anti-parallel diode is sufficient rather than a switch itself to provide the current freewheeling path during the transition from top switch (D1 or D3) to bottom switch (D2 or D4) or *vice versa.*

As mentioned, thyristors are preferred for the director valves D, each comprising a positive thyristor switch $T_p$ and a negative thyristor switch $T_n$, due to their low losses and cost, and high robustness. To successfully commutate the thyristor, the current through the thyristor needs to be brought down to zero and a small negative voltage is to be applied across the thyristor for a specific time duration (typically 500 - 800 $\mu$s for power thyristors). This is necessary to remove the gate charges and prevent the device from latching into conduction when applied a positive voltage across the thyristor after the turn-off event. To understand the commutation problem, two current cases will be discussed below considering one leg 2a of the director valves D1 and D4 and wave shapers 3a and 3b.

Case 1:

The current direction for the case 1 is shown in figure 5 where the current commutation has to take place from top switch D1 to bottom switch D4, i.e., $T_{n1}$ to $T_{p4}$. The voltage across the wave shapers $V_{\alpha\beta}$ is at zero during the commutation process and increases positive as shown in figure 3(b). During the commutation process, the switches $T_{p4}$ and $T_{n4}$ are triggered. Since the voltage $V_{\alpha\beta}$ is increasing positive, a current will be circulated by the wave shaper 3 through the switches as shown in the middle figure. This would naturally allow the current to commutate from the $T_{n1}$ to $T_{p4}$. The commutation happens naturally for this current direction. This case happens for the inductive mode of operation of the converter 1. Thus for the inductive mode of operation, no harmonics are generated by the converter 1 due to the commutation process. It is to be noted that the firing pulses to the bi-directional thyristors are given for a duration of

$$\frac{1}{2f_b} - \left(T_q + T_m\right)$$ where $f_b$ is the base frequency, $T_q$ is the minimum extinction time of the thyristor and $T_m$ is the additional safety margin to prevent commutation failure.

Case 2:

For the capacitive mode of operation of the converter 1, the current direction during the commutation process is as shown in figure 6. When turning ON the bottom thyristors D4, a short is created across the wave shapers 3 as the voltage $V_{\alpha\beta}$ is increasing positive from zero voltage (see figure 3(b)). Thus, the voltage across the wave shaper arms 3a and 3b needs to be made negative for the duration of minimum extinction time of thyristor. To attain this, the top and bottom wave shaper voltage references should continue with their previous line voltage reference for a duration of $T_q$ after the switching commands are given to the thyristors. The voltage references of the top and bottom wave shapers 3a and 3b and the voltage across the director valves D (i.e., $V_{\alpha\beta}$) for the capacitive mode of operation to prevent the commutation failure are such that though the gate pulse for the bottom switch D4 is given at 150°, the top and bottom arm 3a and 3b voltage reference continues to be $V_{ab}$ and $V_{cb}$, respectively, up to 168°. Thus a negative voltage is created across the thyristor $T_{p1}$ for 1 ms to prevent the commutation failure.

Such a modification to the voltage references of the wave shapers 3a and 3b would cause distortion in the converter generated line voltages. The effect of distortion on the converter generated line voltages due to the commutation of thyristor in capacitive mode of operation may be such that up to 3% lower order voltage harmonics are generated by the converter 1. A similar commutation process could be performed for the converter 1 with director valves D having series connected thyristor with anti-parallel diodes for the inductive and capacitive mode of operation.

The harmonic energy required for the purpose of commutation may be in the order of 1 ms i.e., 1 kHz. Hence, it is possible to damp the lower order harmonics (<15th) successfully without affecting the commutation process. The harmonic suppression may be addressed either through control system or through topology, as explained below.

A simple current feedback control (PI or PR based) with a band pass filter aimed at suppressing the lower order harmonics (i.e., <15th harmonic) reduces the magnitude of the lower order harmonics significantly without affecting the commutation process. A harmonic noise may be injected in the converter generated line voltages due to the negative voltage generated by the wave shaper 3 to prevent commutation failure during capacitive mode of operation. A Fourier analysis of the waveform shows that it has all odd harmonics starting from the fundamental component. By adding similar harmonic noise in the voltage reference of the wave shapers, the first harmonic frequency may be moved from fundamental component to any desired harmonic order (but less than the 1 kHz which corresponds to commutation). For example, the first harmonic may be moved 1st to 7th harmonic. Hence harmonic suppression may be either a feedforward expression (since the voltages and the instant of switching can be expression through mathematical expression) or through a current feedback method.

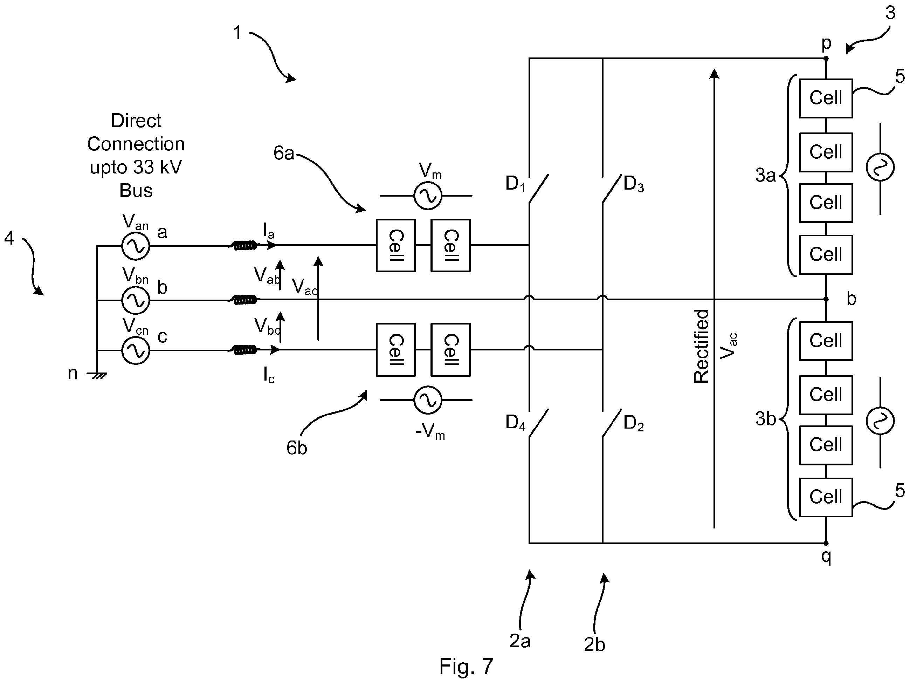

For supressing harmonics by means of converter topology, chain-link cells 6a and 6b, respectively, may be added to the phases 'a' and 'c' on the AC side as shown in figure 7. The voltage reference to the harmonic suppressors are in such a manner as to cancel the negative voltage generated by the wave shapers 3a and 3b for commutation. Hence, a perfect harmonic cancellation may be possible. But it leads to additional cost and it may preferably be used only during capacitive mode of operation. It can be seen from the voltage reference waveform of the harmonic suppression chain-link cells 6a and 6b that the voltage requirement of these arms are $1/4^{th}$ the wave shapers 3a and 3b requirement. Hence this may not be a cost effective solution. It may generally be preferred to perform the harmonic suppression though control solutions as it is needed only during the capacitive mode of operation of the converter. A shunt capacitor branch may be added in parallel to the converter to extend the capacitive reactive power range of the converter.

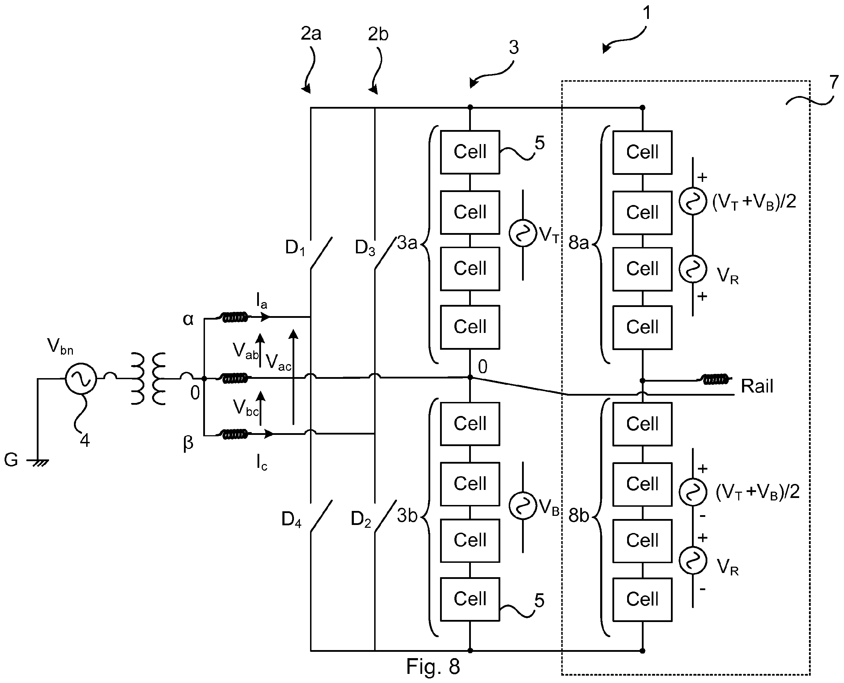

Figure 8 illustrates, as an example how the converter 1 of the present disclosure may be extended to a rail grid 7. With the proposed topology, the sum of voltages across the wave shaper 3 is the DC rectified waveform of the AC side line voltage $V_{ac}$. Hence, it is possible to extend this topology to railway and energy storage applications by adding a additional chain-link arms 8a and 8b similar to the wave shaper arms 3a and 3b of the converter 1.

The proposed topology may use two arms 3a and 3b of a delta chain-link Static Synchronous Compensator (STATCOM) as wave shapers and the third arm is replaced using thyristor based full bridge 2 i.e., director valves D. In some embodiments, the topology replaces one leg of the expensive IGCT's with cheaper and more reliable thyristors. Also, reduction in the loss of the converter 1 in terms of switching and conduction is possible. But, the topology generates lower order harmonics during capacitive mode of operation which may be minimized by a control method proposed.

The topology proposed in this disclosure is hybrid i.e., uses chain-link based wave shapers 3a and 3b and director valve legs 2a and 2b to generate the required AC voltage. The topology possess specific advantage for FACTS applications like extending to the railway and energy storage applications.

Some advantages of embodiments of the present invention include:

1. Reduction in the semiconductor cost: One leg of a delta chain-link Statcom equivalent is replaced with thyristor based director valves D in full bridge 2 configuration. Moreover, the other two legs i.e., wave shapers 3a and 3b may be rated for up to 15% less current (compared against delta chain-link) since no zero sequence current needs to be circulated to balance the cell capacitor energy during unbalanced operating condition.

2. Reduction in losses: The director valves D switching at fundamental frequency and with zero voltage switching condition. Hence no switching loss on the director valves. Also, thyristors may be used which have lower conduction losses. Moreover, in the wave shaper arms 3a and 3b the current may be up to 15% less as compared with delta Statcom and hence reduction in semiconductor losses in those arms as well.

3. The voltage across the sum of wave shaper arms 3a and 3b is DC rectified line voltage. Hence, the topology give a possibility to extend for energy storage or railway applications.

4. The proposed topology may be considered as a replacement for Thyristor Controlled Reactor (TCR) in classic SVC, since large filters are needed for TCR and the response time is slower compared against the proposed topology.

5. The cell capacitor energy balancing during unbalanced operating condition may occur naturally with the proposed topology. Hence, complex mathematical equations or online optimization need not be solved to arrive at the zero sequence components that needs to be added to the voltage reference unlike in delta and wye chain-link topologies.

In some embodiments of the present invention, each of the diverter switches (D) comprises a bi-directional thyristor, or (in other embodiments) a thyristor with anti-parallel diode. However, other types of diverter switches may be used in other embodiments, such as diverter switches comprising an IGCT with anti-parallel diode, or an IGBT with anti-parallel diode.

In some embodiments of the present invention, each of the chain-linked converter cells (5) of the first and second arms (3a, 3b) comprises a plurality of IGCT:s. As discussed herein, each converter cell 5 comprises a plurality of semiconductor switches, preferably forming a bipolar full-bridge topology. According to a preferred embodiment, each semiconductor switch comprises an IGCT. However, additionally or alternatively, other semiconductor switches are also contemplated, e.g. Insulated Gate Bipolar Transistors, IGBT:s.

In some embodiments of the present invention, the converter 1 is configured for a high-voltage AC grid 4 of up to 33 kV, of 1-33 kV such as of 10-33 kV, or connected via a transformer for voltages above 33 kV.

In some embodiments of the present invention, the converter 1 is an SVC.

In some embodiments of the present invention, the converter 1 is a STATCOM.

In some embodiments of the present invention, the converter 1 is configured for a FACTS application.

In some embodiments of the present invention, the converter 1 is configured for an HVDC application. Thus, the converter 1 may be an HVDC converter.

As mentioned above, lower order harmonics are formed by the chain-link arms 3a and 3b during commutation of the diverter switches D. To avoid that these harmonics affect the AC grid 4, they are preferably supressed by means of a control method and/or by means of topology.

Thus, in some embodiments of the present invention, the converter 1 comprises a control arrangement configured (typically by means of software stored in a data storage and executed by processing circuitry of the control arrangement) to supress lower order harmonics formed by the converter, e.g. by means of a band-pass filter or (additionally or alternatively) a proportional resonant controller.

Additionally or alternatively, in some embodiments of the present invention, the converter 1 comprises chain-linked converter cells (6a, 6b) in the connection of the converter to the first phase (a) as well as in the connection of the converter to the third phase (c), arranged to supress lower order harmonics formed by the converter.

In some embodiments of the present invention, the converter 1 is further configured for being connected to a single-phase AC grid 7, e.g. a railway grid, or to an energy storage.

The present disclosure has mainly been described above with reference to a few embodiments. However, as is readily appreciated by a person skilled in the art, other embodiments than the ones disclosed above are equally possible within the scope of the present disclosure, as defined by the appended claims.

**Claims**

1. A power converter (1) configured for being connected to an AC grid (4) having three phases (a, b, c), the converter comprising:

   a full-bridge director switch arrangement (2); and
   a chain-link leg (3) comprising a first arm (3a) of bi-polar chain-linked converter cells (5) connected between a top point (p) and a middle point (b) in series with a second arm (3b) of bi-polar chain-linked converter cells (5) connected between a bottom point (q) and said middle point (b);
   wherein the director switch arrangement (2) comprises first and second parallel director switch legs (2a, 2b) connected across the chain-link leg (3), of which the first director switch leg (2a) comprises a first director switch (D1) in series with a fourth director switch (D4), and the second director switch leg (2b) comprises a second director switch (D2) in series with a third director switch (D3);
   wherein the converter (1) is configured to be connected to the AC grid (4) such that a first phase (a) of the AC grid is connected to the first director switch leg (2a) between the first and fourth director switches (D1, D4), a second phase (b) of the AC grid is connected to the chain-link leg (3) between the first and second chain-link arms (3a, 3b), and a third phase (c) of the AC grid is connected to the second director switch leg (2b) between the second and third director switches (D2, D3); and
   wherein the director switch arrangement is arranged to alternately connect the first and third phases (a, c) to the top point (p) and the bottom point (q), respectively, and to the bottom point (q) and the top point (p), respectively, by switching the director switches every half fundamental frequency cycle.

2. The converter of claim 1, wherein each of the diverter switches (D) comprises a bi-directional thyristor or a thyristor with anti-parallel diode.

3. The converter of any preceding claim, wherein each of the chain-linked converter cells (5) of the first and second arms (3a, 3b) comprises a plurality of Integrated Gate-Commutated Thyristors, IGCT, or Insulated Gate Bipolar Transistors, IGBT.

4. The converter of any preceding claim, wherein the converter (1) is configured for a high-voltage AC grid (4) of up to 33 kV.

**5.** The converter of any preceding claim, wherein the converter (1) is a Static VAR Compensator, SVC.

**6.** The converter of any preceding claim, wherein the converter (1) is a Static Synchronous Compensator, STATCOM.

**7.** The converter of any preceding claim, wherein the converter (1) is configured for a Flexible Alternating Current Transmission Systems, FACTS, application.

**8.** The converter of any preceding claim, wherein the converter (1) is configured for a High Voltage Direct Current, HVDC, application.

**9.** The converter of any preceding claim, further comprising a control arrangement configured to supress lower order harmonics formed by the converter by means of a band-pass filter.

**10.** The converter of any preceding claim, further comprising a control arrangement configured to supress lower order harmonics formed by the converter by means of a proportional resonant controller.

**11.** The converter of any preceding claim, further comprising chain-linked converter cells (6a, 6b) in the connection of the converter to the first phase (a) as well as in the connection of the converter to the third phase (c) arranged to supress lower order harmonics formed by the converter.

**12.** The converter of any preceding claim, wherein the converter (1) is further configured for being connected to a single-phase AC grid (7), e.g. a railway grid.

**13.** The converter of any preceding claim, wherein the switching of the director switches every half fundamental frequency cycle is when a voltage across the first and third phases ($V_{ac}$) is zero.

**14.** An electrical power network comprising the converter (1) of any preceding claim and the three-phase AC grid (4).

**Patentansprüche**

**1.** Leistungsumsetzer (1), der konfiguriert ist, mit einem Wechselstromnetz (4) mit drei Phasen (a, b, c) verbunden zu sein, wobei der Umsetzer Folgendes umfasst:

eine Vollbrücken-Wellenrichterschalteranordnung (2); und einen Reihenschaltungszweig (3), der einen ersten Strang (3a) bipolarer, in Reihe geschalteter Umsetzerzellen (5), die zwischen einem oberen Punkt (p) und einem mittleren Punkt (b) verbunden sind, in Reihe mit einem zweiten Strang (3b) bipolarer, in Reihe geschalteter Umsetzerzellen (5), die zwischen einem unteren Punkt (q) und dem mittleren Punkt (b) verbunden sind, umfasst; wobei die Wellenrichterschalteranordnung (2) einen ersten und einen zweiten parallelen Wellenrichterschalterzweig (2a, 2b) umfasst, die quer zu dem Reihenschaltungszweig (3) verbunden sind, wobei der erste Wellenrichterschalterzweig (2a) einen ersten Wellenrichterschalter (D1) in Reihe mit einem vierten Wellenrichterschalter (D4) umfasst und der zweite Wellenrichterschalterzweig (2b) einen zweiten Wellenrichterschalter (D2) in Reihe mit einem dritten Wellenrichterschalter (D3) umfasst; wobei der Umsetzer (1) konfiguriert ist, derart mit dem Wechselstromnetz (4) verbunden zu sein, dass eine erste Phase (a) des Wechselstromnetzes zwischen dem ersten und dem vierten Wellenrichterschalter (D1, D4) mit dem ersten Wellenrichterschalterzweig (2a) verbunden ist, eine zweite Phase (b) des Wechselstromnetzes zwischen dem ersten und dem zweiten Reihenschaltungsstrang (3a, 3b) mit dem Reihenschaltungszweig (3) verbunden ist und eine dritte Phase (c) des Wechselstromnetzes zwischen dem zweiten und dem dritten Wellenrichterschalter (D2, D3) mit dem zweiten Wellenrichterschalterzweig (2b) verbunden ist; wobei die Wellenrichterschalteranordnung ausgelegt ist, die erste und die dritte Phase (a, c) abwechselnd mit dem oberen Punkt (p) bzw. dem unteren Punkt (q) und mit dem unteren Punkt (q) bzw. dem oberen Punkt (p) zu verbinden, indem die Wellenrichterschalter jeden Halbzyklus der Grundfrequenz umgeschaltet werden.

**2.** Umsetzer nach Anspruch 1, wobei die Umleitungsschalter (D) jeweils einen bidirektionalen Thyristor oder einen Thyristor mit antiparalleler Diode umfassen.

**3.** Umsetzer nach einem der vorhergehenden Ansprüche, wobei die in Reihe geschalteten Umsetzerzellen (5) des ersten und des zweiten Strangs (3a, 3b) jeweils mehrere integrierte Thyristoren mit kommutiertem Gate, IGCT, oder

EP 3 649 729 B1

bipolare Transistoren mit isoliertem Gate, IGBT, umfassen.

4. Umsetzer nach einem der vorhergehenden Ansprüche, wobei der Umsetzer (1) für ein Hochspannungs-Wechselstromnetz (4) mit bis zu 33 kV konfiguriert ist.

5. Umsetzer nach einem der vorhergehenden Ansprüche, wobei der Umsetzer (1) eine statische VAR-Ausgleichseinrichtung, SVC, ist.

6. Umsetzer nach einem der vorhergehenden Ansprüche, wobei der Umsetzer (1) eine statische, synchrone Ausgleichseinrichtung, STATCOM, ist.

7. Umsetzer nach einem der vorhergehenden Ansprüche, wobei der Umsetzer (1) für eine Anwendung für flexible Wechselstromübertragungssysteme, FACTS-Anwendung, konfiguriert ist.

8. Umsetzer nach einem der vorhergehenden Ansprüche, wobei der Umsetzer (1) für eine Hochspannungs-Gleichstromanwendung, HVDC-Anwendung, konfiguriert ist.

9. Umsetzer nach einem der vorhergehenden Ansprüche, der ferner eine Steueranordnung umfasst, die konfiguriert ist, harmonische Komponenten niedriger Ordnung, die durch den Umsetzer gebildet werden, mittels eines Bandpassfilters zu unterdrücken.

10. Umsetzer nach einem der vorhergehenden Ansprüche, der ferner eine Steueranordnung umfasst, die konfiguriert ist, harmonische Komponenten niedriger Ordnung, die durch den Umsetzer gebildet werden, mittels einer Proportionalresonanz-Steuereinheit zu unterdrücken.

11. Umsetzer nach einem der vorhergehenden Ansprüche, der ferner in Reihe geschaltete Umsetzerzellen (6a, 6b) in der Verbindung des Umsetzers mit der ersten Phase (a) sowie in der Verbindung des Umsetzers mit der dritten Phase (c) umfasst, die ausgelegt sind, harmonische Komponenten niedriger Ordnung, die durch den Umsetzer gebildet werden, zu unterdrücken.

12. Umsetzer nach einem der vorhergehenden Ansprüche, wobei der Umsetzer (1) ferner konfiguriert ist, mit einem Einphasen-Wechselstromnetz (7) wie z. B. einem Eisenbahnnetz, verbunden zu sein.

13. Umsetzer nach einem der vorhergehenden Ansprüche, wobei das Umschalten der Wellenrichterschalter jeden Halbzyklus der Grundfrequenz stattfindet, wenn eine Spannung über der ersten und der dritten Phase ($V_{ac}$) null ist.

14. Elektrisches Stromnetz, das den Umsetzer (1) nach einem der vorhergehenden Ansprüche und das Dreiphasen-Wechselstromnetz (4) umfasst.

**Revendications**

1. Convertisseur de puissance (1) configuré pour être connecté à un réseau alternatif (4) comportant trois phases (a, b, c), le convertisseur comprenant :

   un agencement de commutateurs directeurs (2) en pont complet, et
   une branche d'éléments en chaîne (3) comprenant un premier bras (3a) de cellules de convertisseurs bipolaires reliées en chaîne (5) relié entre un point supérieur (p) et un point médian (b) en série avec un second bras (3b) de cellules de convertisseurs bipolaires reliées en chaîne (5), relié entre un point inférieur (q) et ledit point médian (b),
   dans lequel l'agencement de commutateurs directeurs (2) comprend des première et seconde branches de commutateurs directeurs (2a, 2b) parallèles reliées aux bornes de la branche d'éléments en chaîne (3), la première branche de commutateurs directeurs (2a) comprenant un premier commutateur directeur (D1) en série avec un quatrième commutateur directeur (D4), et la seconde branche de commutateurs directeurs (2b) comprenant un deuxième commutateur directeur (D2) en série avec un troisième commutateur directeur (D3), où le convertisseur (1) est configuré pour être connecté au réseau alternatif (4) de sorte à ce que la première phase (a) du réseau alternatif soit reliée à la première branche de commutateurs directeurs (2a) entre les premier et quatrième commutateurs directeurs (D1, D4), que la deuxième phase (b) du réseau alternatif soit

9

reliée entre les premier et second bras (3a, 3b) d'éléments en chaîne (3), et la troisième phase (c) du réseau alternatif soit reliée à la seconde branche de commutateurs directeurs (2b) entre les deuxième et troisième commutateurs directeurs (D2, D3), et

dans lequel l'agencement de commutateurs directeurs est disposé pour relier alternativement les première et troisième phases (a, c) au point supérieur (p) et au point inférieur (q) respectivement, et au point inférieur (q) et au point supérieur (p) respectivement, en commutant les commutateurs directeurs à chaque demi-cycle de fréquence fondamentale.

2. Convertisseur selon la revendication 1, dans lequel chacun des commutateurs directeurs (D) comprend un thyristor bidirectionnel ou un thyristor comportant une diode anti parallèle.

3. Convertisseur selon l'une quelconque des revendications précédentes, dans lequel chacune des cellules de convertisseurs bipolaires reliés en chaîne (5) des premier et second bras (3a, 3b) comprend une pluralité de thyristors commutés à grille isolée, IGCT, ou de transistors bipolaires à grille isolée, IGBT.

4. Convertisseur selon l'une quelconque des revendications précédentes, où le convertisseur (1) est configuré pour un réseau alternatif (4) haute tension pouvant aller jusqu'à 33 kV.

5. Convertisseur selon l'une quelconque des revendications précédentes, où le convertisseur (1) est un compensateur VAR statique, SVC.

6. Convertisseur selon l'une quelconque des revendications précédentes, où le convertisseur (1) est un compensateur synchrone statique, STATCOM.

7. Convertisseur selon l'une quelconque des revendications précédentes, où le convertisseur (1) est configuré pour une application de systèmes de transmission flexible en courant alternatif, FACTS.

8. Convertisseur selon l'une quelconque des revendications précédentes, où le convertisseur (1) est configuré pour une application de courant continu haute tension, HVDC.

9. Convertisseur selon l'une quelconque des revendications précédentes, comprenant en outre un dispositif de commande configuré pour supprimer les harmoniques d'ordre inférieur formées par le convertisseur au moyen d'un filtre passe bande.

10. Convertisseur selon l'une quelconque des revendications précédentes, comprenant en outre un dispositif de commande configuré pour supprimer les harmoniques d'ordre inférieur formées par le convertisseur au moyen d'un contrôleur résonnant proportionnel.

11. Convertisseur selon l'une quelconque des revendications précédentes, comprenant en outre des cellules de convertisseurs en chaîne (6a, 6b) dans la connexion du convertisseur vers la première phase (a) tout comme dans la connexion du convertisseur vers la troisième phase (c), disposés pour supprimer les harmoniques d'ordre inférieur formées par le convertisseur.

12. Convertisseur selon l'une quelconque des revendications précédentes, où le convertisseur (1) est en outre configuré pour être connecté à un réseau alternatif monophasé (7), par exemple un réseau pour chemin de fer.

13. Convertisseur selon l'une quelconque des revendications précédentes, dans lequel la commutation des commutateurs directeurs à chaque demi-cycle de fréquence fondamentale se produit lorsque la tension aux bornes des première et troisième phases ($V_{ac}$) est nulle.

14. Réseau d'alimentation électrique comprenant le convertisseur (1) conforme à l'une quelconque des revendications précédentes et le réseau alternatif triphasé (4).

Fig. 1

EP 3 649 729 B1

Fig. 2

Wave shaper generated voltages

(b)

Top and bottom wave shaper voltage reference

(a)

Fig. 3

Fig. 4

Fig. 5

EP 3 649 729 B1

Fig. 6

Fig. 7

Fig. 8

EP 3 649 729 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014082657 A1

**Non-patent literature cited in the description**

- The augmented modular multilevel converter. **OATES, COLIN et al.** 2014, 16TH EUROPEAN CONFERENCE ON POWER ELECTRONICS AND APPLICATIONS. IEEE, 26 August 2014

- **OATES, COLIN et al.** The controlled transition bridge. *2015, 17TH EUROPEAN CONFERENCE ON POWER ELECTRONICS AND APPLICATIONS,* 08 September 2015